(19) **Europäisches Patentamt / European Patent Office / Office européen des brevets**

(11) **EP 4 725 637 A1**

(12) **EUROPEAN PATENT APPLICATION**
published in accordance with Art. 153(4) EPC

(43) Date of publication:
**15.04.2026 Bulletin 2026/16**

(21) Application number: **24819044.9**

(22) Date of filing: **23.04.2024**

(51) International Patent Classification (IPC):
**B23K 26/00** (2014.01)

(52) Cooperative Patent Classification (CPC):
**B23K 26/00**

(86) International application number:
**PCT/JP2024/015888**

(87) International publication number:
**WO 2024/252806 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.06.2023 JP 2023093437**

(71) Applicant: **Panasonic Intellectual Property
Management Co., Ltd.
Kadoma-shi, Osaka 571-0057 (JP)**

(72) Inventors:
• **SAITOH, Mitsuo
Kadoma-shi, Osaka 571-0057 (JP)**
• **KITAMURA, Yoshiro
Kadoma-shi, Osaka 571-0057 (JP)**
• **MORI, Masahiro
Kadoma-shi, Osaka 571-0057 (JP)**
• **HARA, Nobuo
Kadoma-shi, Osaka 571-0057 (JP)**
• **WADA, Tosihiko
Kadoma-shi, Osaka 571-0057 (JP)**

(74) Representative: **Grünecker Patent- und
Rechtsanwälte
PartG mbB
Leopoldstraße 4
80802 München (DE)**

(54) **LASER PROCESSING SYSTEM**

(57) A laser processing system of the present disclosure includes a laser processing device that irradiates a workpiece with laser light, a light detector that detects return light including at least one of thermal radiation, visible light, or reflected light, the return light being generated by irradiating the workpiece with the laser light, and a controller that controls the laser processing device, in which the controller is configured to generate waveform data indicating an intensity of the return light during processing of the workpiece based on the return light detected by the light detector, extract a feature value from the waveform data, specify a first parameter having change among a plurality of parameters related to processing of the laser processing device based on the feature value, and change a second parameter among the plurality of parameters based on the first parameter.

**(Cont. next page)**

EP 4 725 637 A1

# FIG. 1

**Description**

TECHNICAL FIELD

The present disclosure relates to a laser processing system.

BACKGROUND ART

PTL 1 discloses a laser processing system that corrects a focal position shift and that includes a machine learning device configured to learn a positional relationship between a workpiece and an effective condensation position of a condensing optical system when the workpiece is processed by a laser processing device including the condensing optical system.

Citation List

Patent Literature

PTL 1: Unexamined Japanese Patent Publication No. 2020-175425 A laser processing system according to an aspect of the present disclosure includes a laser processing device that irradiates a workpiece with laser light, a light detector that detects return light including at least one of thermal radiation, visible light, or reflected light, the return light being generated by irradiating the workpiece with the laser light, and a controller that controls the laser processing device, in which the controller is configured to generate waveform data indicating an intensity of the return light during processing of the workpiece based on the return light detected by the light detector, extract a feature value from the waveform data, specify a first parameter having change among a plurality of parameters related to processing of the laser processing device based on the feature value, and change a second parameter among the plurality of parameters based on the first parameter.

BRIEF DESCRIPTION OF THE DRAWINGS

Fig. 1 is a schematic diagram schematically illustrating a laser processing system according to a first exemplary embodiment of the present disclosure.

Fig. 2 is a block diagram illustrating a function of a controller of the laser processing system of Fig. 1.

Fig. 3A is a graph illustrating an example of waveform data on return light in the laser processing system of Fig. 1.

Fig. 3B is a graph illustrating an example of waveform data on return light in the laser processing system of Fig. 1.

Fig. 4 is a schematic diagram schematically illustrating a laser processing system according to a second exemplary embodiment of the present disclosure.

Fig. 5 is a schematic diagram schematically illustrating a diffractive optical element of the laser processing system of Fig. 4.

Fig. 6A is a schematic diagram illustrating an example of an irradiation position of laser light in the diffractive optical element of the laser processing system of Fig. 4.

Fig. 6B is a schematic diagram illustrating a laser beam distribution near a condensation point in the example of Fig. 6A.

Fig. 7A is a schematic diagram illustrating another example of the irradiation position of the laser light in the diffractive optical element of the laser processing system of Fig. 4.

Fig. 7B is a schematic diagram illustrating a laser beam distribution near a condensation point in the example of Fig. 7A.

Fig. 8A is a schematic diagram illustrating yet another example of the irradiation position of the laser light in the diffractive optical element of the laser processing system of Fig. 4.

Fig. 8B is a schematic diagram illustrating a laser beam distribution near a condensation point in the example of Fig. 8A.

Fig. 9A is a schematic diagram illustrating yet another example of the irradiation position of the laser light in the diffractive optical element of the laser processing system of Fig. 4.

Fig. 9B is a schematic diagram illustrating a laser beam distribution near a condensation point in the example of Fig. 9A.

Fig. 10A is a graph illustrating reference waveform data on return light in a laser processing system according to a third exemplary embodiment of the present disclosure.

Fig. 10B is a graph illustrating waveform data on return light in abnormal processing in the laser processing system according to the third exemplary embodiment of the present disclosure.

DESCRIPTION OF EMBODIMENT

(Background to the present invention)

Laser welding is known as a technique for welding a workpiece to another workpiece. The laser welding is a technique for irradiating a workpiece with laser light emitted from a laser oscillator to melt the workpiece using the amount of heat of the laser light, and welding the workpiece to another workpiece to mechanically and/or electrically connect the objects to be processed to each other. Laser welding techniques are commonly used in a wide variety of fields, such as consumer electronics, precision equipment, and automotive parts.

The laser welding has been improved in weld quality by adjusting various parameters related to the laser oscillator in accordance with a type of the laser oscillator or a shape or a size of a workpiece. However, a prerequisite of continuous operation causes a problem that the weld quality is less likely to be maintained due to various fluctuation factors involved in a workpiece or welding equipment.

To prevent deterioration of weld quality due to the various fluctuation factors, PTL 1 discloses a laser processing system that corrects a focal position shift, for example. Unfortunately, PTL 1 does not consider fluctuation factors such as a weld width or a weld depth other than the focal position, and thus there is still room for improvement in terms of improving the weld quality.

The present inventors have studied a laser processing system capable of improving weld quality, and have reached the invention below.

(First exemplary embodiment)

[General configuration]

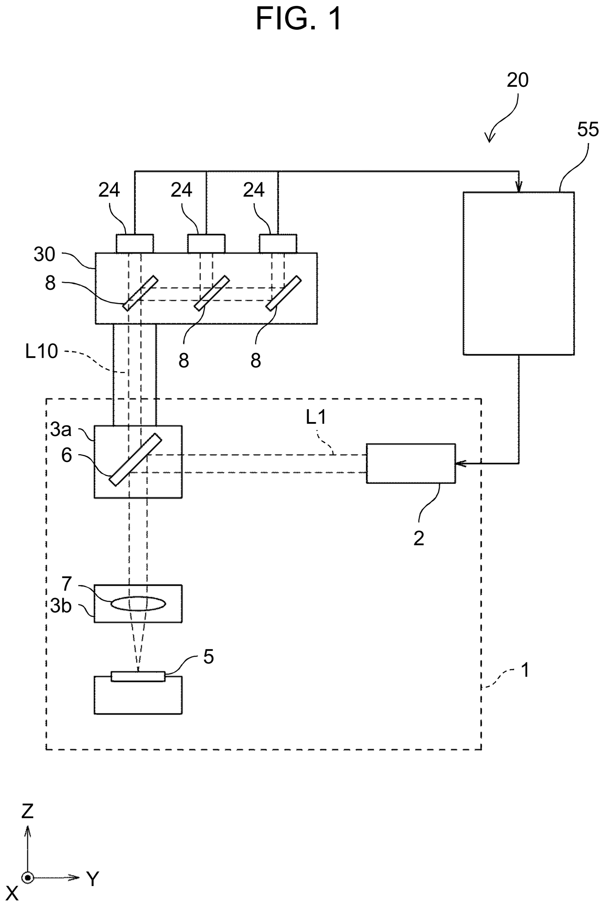

Fig. 1 is a schematic diagram schematically illustrating laser processing system 20 according to a first exemplary embodiment of the present disclosure. Each drawing in the description below indicates an X-direction that may be referred to as a depth direction, a Y-direction that may be referred to as a width direction, and a Z-direction that may be referred to as a height direction.

Laser processing system 20 is capable of welding or cutting workpiece 5 by irradiating workpiece 5 with laser light. Workpiece 5 is made of a metal plate, for example.

As illustrated in Fig. 1, laser processing system 20 includes laser processing device 1, light detector 24, lens unit 30, and controller 55.

Laser processing device 1 includes laser oscillator 2 that oscillates laser light, lens unit 3a, and lens unit 3b.

Laser oscillator 2 includes an optical element such as a collimator lens internally having a function of collimating laser light, for example, and thus enables parallel laser light L1 to be emitted. Available examples of laser oscillator 2 include a single mode fiber laser having a wavelength of 1070 nm, a maximum output of 3 kW, continuous oscillation, and excellent beam quality, the single mode fiber laser enabling a small condensed spot diameter and a long focal depth. Laser light L1 emitted from laser oscillator 2 is reflected by half mirror 6 of lens unit 3a and directed to workpiece 5. The laser light reflected by half mirror 6 is condensed by lens 7 of lens unit 3b and applied to workpiece 5.

When workpiece 5 is irradiated with the laser light, a surface of workpiece 5 is melted to weld workpiece 5. When the surface of workpiece 5 is melted, return light including at least one of thermal radiation, visible light, and reflected light is generated. The thermal radiation is generated with increase in temperature of a part of workpiece 5, the part being irradiated with the laser light, when workpiece 5 is irradiated with the laser light. The visible light is plasma light generated when workpiece 5 is melted by irradiation with the laser light and becomes vapor and absorbs the laser light. The reflected light is laser light reflected by workpiece 5. Return light L10 emitted from the surface of workpiece 5 passes through half mirror 6 to be dispersed into three types of light (thermal radiation, visible light, and reflected light) by lens unit 30, and light detector 24 detects each light. Lens unit 30 includes three half mirrors 8 to disperse and direct return light L10 to light detector 24. Return light L10 is processed by controller 55 as information including a processing state of workpiece 5.

Light detector 24 detects return light L10 generated by irradiating workpiece 5 with laser light. Light detector 24 may be composed of a photodetector, for example. Using the photodetector enables the return light detected to be converted into an electric signal.

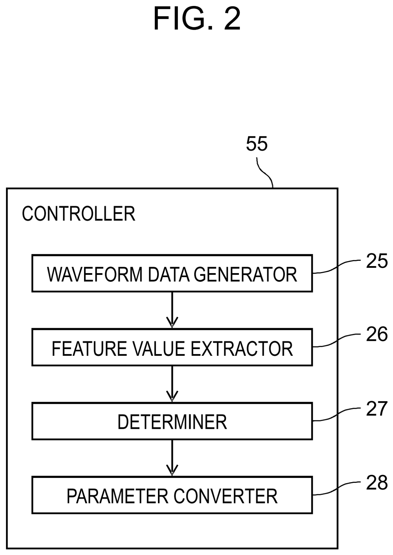

Fig. 2 is a block diagram illustrating functions of controller 55. As illustrated in Fig. 2, controller 55 includes waveform data generator 25, feature value extractor 26, determiner 27, and parameter converter 28 in the present exemplary embodiment.

Controller 55 functions to control the whole of laser processing system 20. Controller 55 includes a processor that implements a predetermined function by executing a program stored in a built-in storage device, for example. Controller 55 is not limited to one that implements a predetermined function by cooperation of hardware and software, and may be a hardware circuit designed to implement the predetermined function. That is, controller 55 can be composed of various processors such as a microcomputer, a CPU, an MPU, a GPU, a DSP, an FPGA, and an ASIC.

Waveform data generator 25 generates waveform data indicating intensity of an electrical signal indicating return light L10 during processing of workpiece 5 based on the electrical signal detected by light detector 24. Waveform data generator 25 generates waveform data on the electrical signal detected by light detector 24 for each shot of processing.

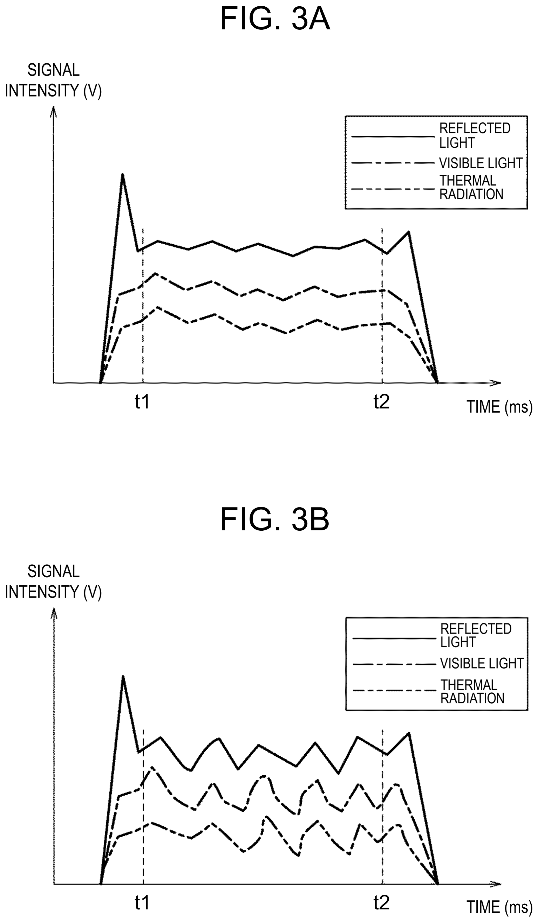

Figs. 3A and 3B are each a diagram illustrating an example of waveform data generated by waveform data generator 25. Fig. 3A illustrates reference waveform data, and Fig. 3B illustrates waveform data on workpiece 5 during abnormal processing. The reference waveform data is calculated based on a plurality of waveform data on workpiece 5 during processing without abnormality. For example, the reference waveform data can be generated by calculating an average of a plurality of waveform data during processing without abnormality.

To generate the reference waveform data, waveform data on workpiece 5 during processing without abnormality may be acquired in advance. For example, waveform data during stable production may be acquired for a plurality of shots to acquire a group of waveform data during normal processing in consideration of production variation that falls within a range of a good finished product. Then, the reference waveform data can be generated based on the waveform data group during the normal processing.

When workpiece 5 is irradiated with laser light, a material of workpiece 5 is melted at a processing point irradiated with laser light L1. As processing proceeds, melting also proceeds to form a molten pool at the processing point. Waveform data generator 25 generates waveform data indicating intensity of return light indicating return light L10 in processing of one shot based on the return light detected by light detector 24. More specifically, waveform data generator 25 generates a relationship between signal intensity of each of thermal radiation, visible light, and reflected light in the processing of one shot and elapsed time as waveform data as illustrated in Figs. 3A and 3B.

In comparison between the waveform data of Fig. 3A and the waveform data of Fig. 3B, the waveform data of Fig. 3B has a larger fluctuation in intensity. For example, scanning speed of laser light for a desired welding shape may be increased to shorten takt time. For this processing, the laser light is set to be output with high power as processing conditions of the laser light. The processing conditions with high output power cause a defect phenomenon, such as spattering in which minute metals of the material of workpiece 5 are scattered, to be likely to occur. The spattering may be caused by reasons as follows: higher energy is locally input at the processing point of workpiece 5; a thermal gradient in the molten pool is increased to generate heat convection in the molten pool; and vibration on a surface of the molten pool is increased. As a result of the increase in vibration on the surface of the molten pool, a liquid is likely to form a minute shape on the surface of the molten pool to cause the spattering or the like to be likely to occur. For example, a large vibration on the surface of the molten pool causes shape or thermal fluctuation of return light L10. As a result, waveform data on return light L10 has a large fluctuation in intensity as illustrated in Fig. 3B. Thus, when waveform data as illustrated in Fig. 3B is obtained, parameters related to processing of laser processing device 1 are changed.

The parameters related to the processing of laser processing device 1 is changed based on a feature value in the waveform data.

The feature value in the waveform data is extracted by feature value extractor 26 of controller 55. The feature value can be extracted by calculating a difference in at least one of an average value and a peak value of intensity, and an area value between a plurality of waveform data acquired in advance during processing without abnormality and the waveform data generated by waveform data generator 25, for example. The feature value also can be extracted by calculating a difference in at least one of the number of peaks, the number of valleys, an interval between two consecutive peaks, or an interval between two consecutive valleys in a predetermined time range between the reference waveform data and the waveform data generated by the waveform data generator 25, for example. Alternatively, the feature value can be extracted by calculating a difference in at least one of a maximum value of a slope formed by a mountain or a valley in a predetermined time range, and a maximum value of a slope formed by a mountain and a valley between the reference waveform data and the waveform data generated by the waveform data generator 25.

The feature value can be expressed by a numerical value indicating a difference between the reference waveform data and the generated waveform data, for example. Depending on a cause of abnormality detected, a different feature value can be used. Examples of the cause of abnormality include laser output, a laser focal position, perforation of workpiece 5, and molten pool wavefront vibration. The molten pool wavefront vibration indicates vibration of a wavefront of the molten pool caused by vibration of the surface of the molten pool due to heat convection.

For example, when the laser focal position is abnormal, the laser light is not just focused on the surface of workpiece 5, and thus return light L10 tends to decrease in intensity. For this abnormality, feature value extractor 26 calculates a first integrated value that is an integrated value of return light L10 in the reference waveform data. Feature value extractor 26 then calculates a second integral value that is an integral value of return light L10 in the generated waveform data. Feature value extractor 26 extracts a difference between the first integral value and the second integral value as the feature value. For example, when workpiece 5 is perforated, return light L10 may locally increase or decrease in intensity in a hole. For this intensity, feature value extractor 26 specifies first intensity that is intensity of return light L10 in the reference waveform data. Feature value extractor 26 then specifies second intensity that is intensity of return light L10 in the generated waveform data. Feature value extractor 26 extracts a difference between the first intensity and the second intensity as the feature value. When vibration is generated on the surface of the molten pool, for example, return light L10 changes in reflectance, and then the change in the reflectance appears in waveform data as a change in intensity of return light L10. For this change, feature value extractor 26 calculates a first intensity average value that is an average value of values of intensity of return light L10 in the reference waveform data during a predetermined time. Feature value extractor 26 then calculates a second intensity average value that is an average value of values of intensity of return light L10 during a predetermined time in the generated waveform data. Feature value extractor 26 extracts a difference between the first intensity average value and the second intensity average value as the feature value. The predetermined time is between time t1 and time t2 in Figs. 3A and 3B, for example.

Based on the feature value extracted, determiner 27 determines whether the processing of workpiece 5 is normal or abnormal.

For example, determiner 27 may determine whether the processing is normal or abnormal by comparing the feature value of the waveform data with a determination algorithm created in advance. When the processing is abnormal, causes of the abnormality may be further classified based on the determination algorithm.

When determiner 27 determines that the processing is abnormal, parameter converter 28 of controller 55 changes parameters related to the processing of laser processing device 1. Parameter converter 28 calculates a change value of each of the parameters related to the processing based on the feature value extracted, the parameters including a laser output value, a laser focal position, laser scanning speed, a laser energy distribution, and molten pool wavefront vibration described below, for example.

The parameters related to the processing of laser processing device 1 also include irradiation conditions of laser light or physical property conditions related to a material of a workpiece, for example. Parameter converter 28 calculates a parameter value to be changed based on a correlation between these parameters related to the processing and a value indicating weld quality for workpiece 5. Examples of the weld quality include a weld width and a weld depth.

For example, the irradiation conditions of laser light include the laser output value denoted by $X_1$, the laser focal position denoted by $X_2$, the laser scanning speed denoted by $X_3$, the laser energy distribution denoted by $X_4$, and the molten pool wavefront vibration denoted by $X_5$. The physical property conditions of workpiece 5 include a thickness of the workpiece denoted by $X_6$, a material of the workpiece denoted by $X_7$, and a thickness of the workpiece denoted by $X_8$. Expression (1) and Expression (2) below represent a correlation between these parameters and melting quality including melting width $Y_1$ and melting depth $Y_2$.

$$Y_1 = f(X_1) + f(X_2) + f(X_3) + f(X_4) + f(X_5) + f(X_6) + f(X_7) + f(X_8) \ ... \ (1)$$

$$Y_2 = F(X_1) + F(X_2) + F(X_3) + F(X_4) + F(X_5) + F(X_6) + F(X_7) + F(X_8) \ ... \ (2)$$

Weld width Y1 and weld depth Y2 each indicating the weld quality can be an objective variable. The irradiation conditions or the physical property conditions of workpiece 5 may be an explanatory variable.

When the processing of workpiece 5 is abnormal, at least one of parameters $X_1$ to $X_8$ related to the processing varies. As can be seen from Expressions (1) and (2), when any one of parameters $X_1$ to $X_8$ related to the processing varies, values of melting width $Y_1$ and melting depth $Y_2$ also vary. Parameter converter 28 specifies a parameter that has varied (first parameter) based on a result determined by determiner 27, and changes a second parameter among parameters $X_1$ to $X_8$ related to the processing based on the first parameter specified. The first parameter and the second parameter may be identical or different.

The present exemplary embodiment will be described in which abnormality is determined based on a feature value, and molten pool wavefront vibration is specified as a cause of the abnormality. The molten pool is a part where workpiece 5 is melted by irradiation with laser light. As described above, a difference between the first intensity average value and the second intensity average value is extracted as the feature value for the abnormality caused by the molten pool wavefront vibration. For example, determiner 27 can determine that processing is abnormal when the feature value is larger than a predetermined threshold value. When determiner 27 determines that the processing is abnormal, parameter converter 28 acquires molten pool wavefront vibration $X_5$ as a parameter that has varied from Expressions (1) and (2). Parameter converter 28 further calculates change values of parameters $X_1$ to $X_8$ related to the processing to cancel variation values of weld width $Y_1$ and weld depth $Y_2$ due to variation of molten pool wavefront vibration $X_5$. Values of weld width $Y_1$ and weld depth $Y_2$ indicating weld quality can be stabilized by controller 55 that controls laser processing device 1 based on the changed values of the parameters.

For example, when abnormality is determined based on a feature value and molten pool wavefront vibration is specified as a cause of the abnormality, parameter converter 28 can change a value of laser energy distribution $X_4$ to uniform each of melting width $Y_1$ and melting depth $Y_2$.

The second parameter to be changed may be determined in advance according to which of $X_1$ to $X_8$ serves as the first parameter. For example, for abnormality due to laser output, parameter $X_1$ indicating a laser output value or parameter $X_2$ indicating a laser focal position is preliminarily determined to be changed.

The function of controller 55 described above can be implemented using a model constructed using a machine learning algorithm, for example. For example, controller 55 can acquire a parameter related to processing of workpiece 5 by using an estimation model created by machine learning based on teacher data in which a feature value of waveform data is associated with a parameter related to processing of laser processing device 1. The estimation model can be constructed using a machine learning algorithm such as deep learning or a neural network, for example. Controller 55 can acquire a parameter related to processing of laser processing device 1 output from the estimation model by inputting the feature value of the waveform data to the estimation model. Controller 55 can control the laser processing device based on the parameter related to the processing of the laser processing device output from the estimation model.

[Effect]

The exemplary embodiment described above enables achieving effects below.

The laser processing system includes laser processing device 1, light detector 24, and controller 55. Laser processing device 1 irradiates workpiece 5 with laser light L1. Light detector 24 detects return light L10 including at least one of thermal radiation, visible light, and reflected light generated by irradiating workpiece 5 with laser light L1, and converts the return light L10 into an electric signal. Controller 55 controls laser processing device 1. Controller 55 generates waveform data indicating intensity of return light L10 during processing of workpiece 5 based on the electric signal detected by light detector 24. Controller 55 extracts a feature value in the waveform data. Controller 55 changes a parameter related to the processing of laser processing device 1 based on the feature value.

The configuration described above enables providing a laser processing system improved in weld quality. The waveform data is generated by detecting return light L10 from workpiece 5 and the feature value is extracted based on the waveform data, thus enabling calculation of a difference between waveform data on normal processing and waveform data on abnormal processing. Changing a parameter related to the processing of laser processing device 1 based on the difference between the normal processing and the abnormal processing enables laser processing to be performed with desired weld quality.

Although the exemplary embodiment described above has been described with an example in which laser processing device 1 includes laser oscillator 2, lens unit 3a, and lens unit 3b, the present invention is not limited to the example. Laser processing device 1 may be any device that can irradiate workpiece 5 with laser light.

Although the exemplary embodiment described above has been described with an example in which return light L10 emitted from a surface of workpiece 5 is dispersed into three types of light (thermal radiation, visible light, and reflected light) by lens unit 30, the present invention is not limited to the example. Return light L10 may be detected by light detector 24 without being dispersed, or may be dispersed into two or equal to or more than four types of light.

Although the exemplary embodiment described above has been described with an example in which controller 55 controls the laser processing device using the estimation model, the present invention is not limited to the example. Controller 55 may control the laser processing device using no estimation model.

Although the exemplary embodiment described above has been described with an example in which controller 55 determines whether the processing of workpiece 5 is normal or abnormal based on the feature value of the waveform data, the present invention is not limited to the example. Controller 55 may change the parameter related to the processing of workpiece 5 based on the feature value of the waveform data without determining whether the processing of workpiece 5 is normal or abnormal.

Although the exemplary embodiment described above has been described with an example in which controller 55 calculates the changed value of the parameter using the correlation equation, the present invention is not limited to the example. The correlation equation is not limited to the example described above, and may be an expression indicating a correlation between melting quality and a parameter related to processing. Alternatively, no correlation equation may be used. The explanatory variable and the objective variable of the correlation equation are also not limited to those in the example described above.

Although the exemplary embodiment described above has been described with an example in which the feature value of the waveform data is used as input data from the estimation model, the present invention is not limited to the example. For example, waveform data and a parameter related to processing may be used as teacher data for the estimation model, waveform data may be used as input data, and a changed value of a parameter related to processing may be used as output data.

Although the exemplary embodiment described above has been described with an example in which the output data from the estimation model is the changed value of the parameter, the present invention is not limited to the example. For example, a feature value of waveform data and a cause of abnormality may be used as the teacher data from the estimation model, the feature value of the waveform data may be used as the input data, and the cause of the abnormality may be used as the output data.

(Second exemplary embodiment)

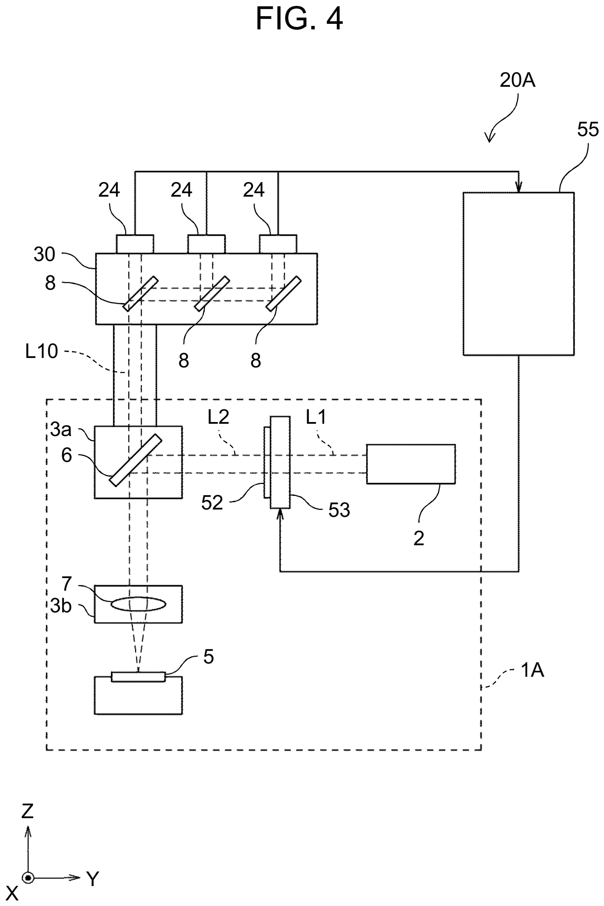

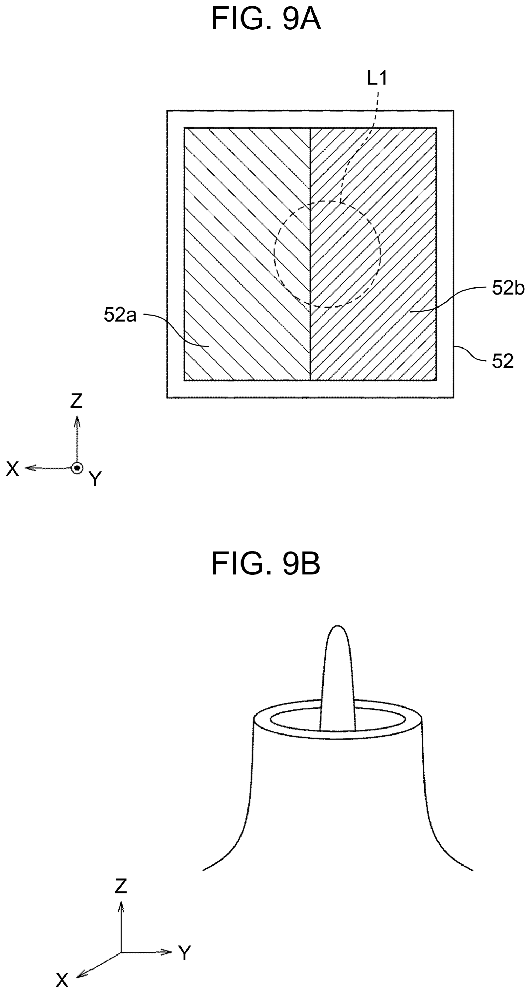

With reference to Figs. 4 to 9B, a second exemplary embodiment will be described. The second exemplary embodiment includes components identical or equivalent to those in the first exemplary embodiment, the components being denoted by the same reference marks as those in the first exemplary embodiment. Duplicate description of the first exemplary embodiment will not be described in the second exemplary embodiment.

Fig. 4 is a schematic diagram schematically illustrating laser processing system 20A according to the second exemplary embodiment of the present disclosure. As illustrated in Fig. 4, the second exemplary embodiment is different from the first embodiment in that laser processing device 1A includes diffractive optical element 52.

As illustrated in Fig. 4, laser light L1 emitted from laser oscillator 2 passes through diffractive optical element 52 in the present exemplary embodiment. Laser light L2 having passed through diffractive optical element 52 is reflected by half mirror 6 of lens unit 3a and directed to workpiece 5. Diffractive optical element 52 can be moved in the X direction and the Y direction by driver 53 in the present exemplary embodiment. Driver 53 is capable of moving diffractive optical element 52 in the X direction and the Y direction under control of controller 55.

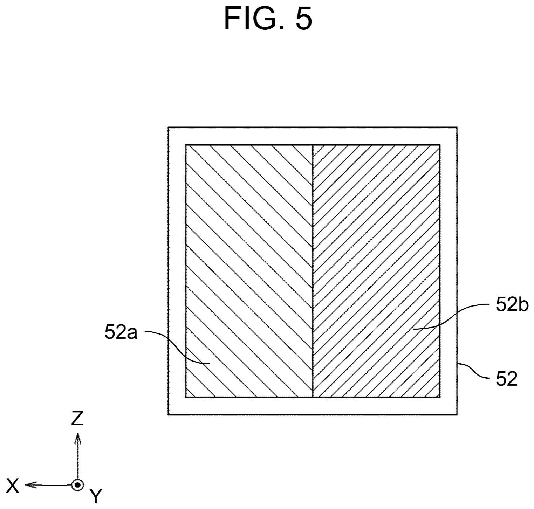

Fig. 5 is a schematic diagram schematically illustrating the diffractive optical element 52 of the laser processing system 20A in Fig. 4. Diffractive optical element 52 is made of a material allowing laser light L1 to pass through the material, and has at least two fine diffraction patterns 52a and 52b. Diffractive optical element 52 is formed in a rectangular shape in plan view with fine diffraction pattern 52a and fine diffraction pattern 52b that are each in an identical shape in the present exemplary embodiment.

Driver 53 is attached to diffractive optical element 52 to change a relative position between laser light L1 and diffractive optical element 52. Driver 53 is attached to diffractive optical element 52 to change the relative position between laser light L1 and diffractive optical element 52 by moving diffractive optical element 52 in the present exemplary embodiment. Alternatively, driver 53 may be attached to laser oscillator 2. This configuration enables the relative position between laser light L1 and diffractive optical element 52 to be changed by moving laser oscillator 2 while fixing diffractive optical element 52.

Changing the relative position between laser light L1 and diffractive optical element 52 enables change in an energy state of laser light L2 with which workpiece 5 is irradiated. When molten pool wavefront vibration $X_5$ fluctuates as described in the first exemplary embodiment, for example, weld quality can be maintained at a predetermined value by changing the energy state of laser light L2 with which workpiece 5 is irradiated, such as laser energy distribution $X_4$, by changing the relative position between laser light L1 and diffractive optical element 52.

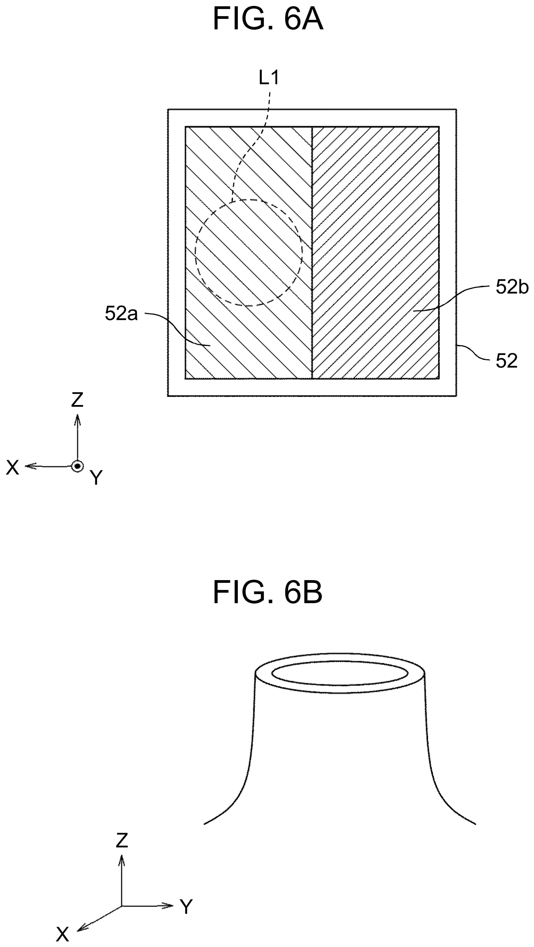

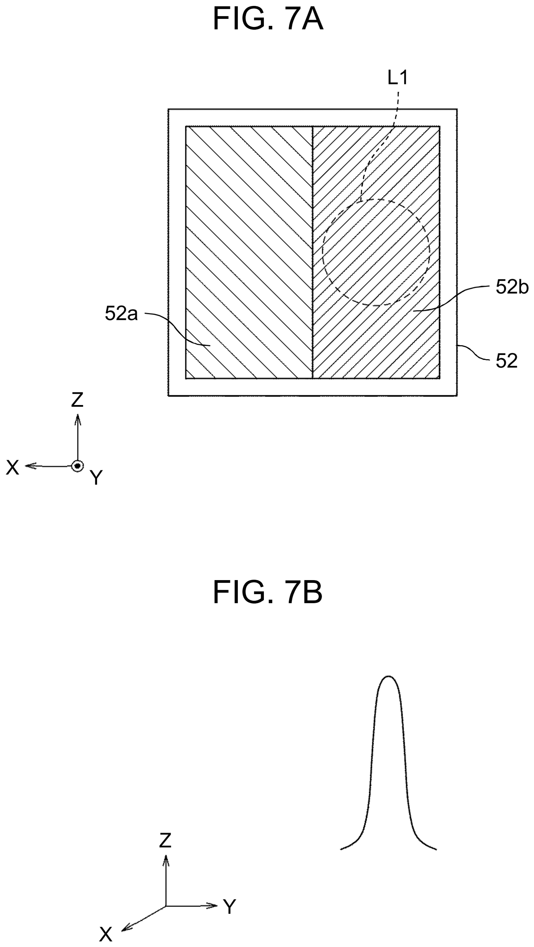

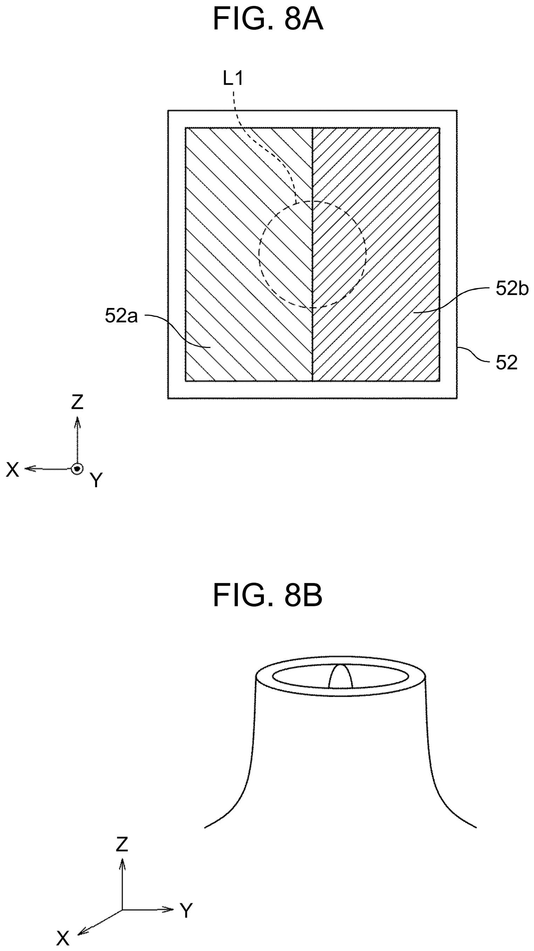

The change in the energy state of laser light L2 using diffractive optical element 52 will be described with reference to Figs. 6A to 9B. Fig. 6A is a schematic diagram illustrating an example of an irradiation position of laser light in diffractive optical element 52 of laser processing system 20A of Fig. 4. Fig. 6B is a schematic diagram illustrating a laser beam distribution near a condensation point in the example of Fig. 6A. Fig. 7A is a schematic diagram illustrating another example of the irradiation position of the laser light in diffractive optical element 52 of laser processing system 20A of Fig. 4. Fig. 7B is a schematic diagram illustrating a laser beam distribution near a condensation point in the example of Fig. 7A. Fig. 8A is a schematic diagram illustrating yet another example of the irradiation position of the laser light in diffractive optical element 52 of laser processing system 20A of Fig. 4. Fig. 8B is a schematic diagram illustrating a laser beam distribution near a condensation point in the example of Fig. 8A. Fig. 9A is a schematic diagram illustrating yet another example of the irradiation position of the laser light in diffractive optical element 52 of laser processing system 20A of Fig. 4. Fig. 9B is a schematic diagram illustrating a laser beam distribution near a condensation point in the example of Fig. 9A.

When laser light L1 passes through only fine diffraction pattern 52a as illustrated in Fig. 6A, laser light L2 is annularly distributed as illustrated in Fig. 6B near the condensation point, that is, on a surface of workpiece 5. When laser light L2 passes through only fine diffraction pattern 52b as illustrated in Fig. 7A, laser light L2 is distributed in a dot shape as illustrated in Fig. 7B near the condensation point.

When the relative position between laser light L1 and diffractive optical element 52 is changed to allow laser light L1 to pass through diffractive optical element 52 over fine diffraction pattern 52a and fine diffraction pattern 52b as illustrated in Fig. 8A, a distribution of laser light L2 is as illustrated in Fig. 8B. This relative position enables obtaining the distribution of laser light L2 in which the distribution illustrated in Fig. 6B and the distribution illustrated in Fig. 7B are combined with each other. When the relative position between laser light L1 and diffractive optical element 52 is further changed as illustrated in Fig. 9A, laser light L2 has a distribution near the condensing point as illustrated in Fig. 9B. Adjusting the relative position between laser light L1 and diffractive optical element 52 enables obtaining a desired laser energy state near the condensation point.

The distribution of laser light L2 obtained by fine diffraction pattern 52b illustrated in Fig. 7B tends to have a function in which the laser light L2 is located at the center of the processing point of workpiece 5 to melt workpiece 5. In contrast, the distribution of laser light L2 obtained by fine diffraction pattern 52a illustrated in Fig. 6B tends to have a function of applying preheating to workpiece 5 to suppress a rapid temperature rise when a molten pool is formed in workpiece 5.

A combination of the distribution of laser light obtained by fine diffraction pattern 52a and the distribution of laser light obtained by fine diffraction pattern 52b as illustrated in Figs. 8B and 9B enables change in an energy distribution at the processing point of workpiece 5. For example, the function of suppressing the rapid temperature rise in the distribution of laser light L2 obtained by fine diffraction pattern 52a illustrated in Fig. 6B enables suppressing a thermal gradient in the molten pool formed in workpiece 5 to suppress increase of heat convection. As a result, vibration on the surface of the molten pool can be prevented from increasing, so that melting quality can be improved by suppressing an occurrence of spattering or the like. When the distribution of laser light L2 is changed by changing the relative position between laser light L1 and diffractive optical element 52 as described above, a desired energy distribution can be obtained at the processing point of workpiece 5 to implement advanced control of the energy state at the processing point.

Controller 55 controls driver 53 based on the parameter of processing conditions determined by parameter converter 28 of controller 55 in the present exemplary embodiment, so that laser energy distribution $X_4$ of laser light L2 can be adjusted. For example, when laser light L1 is shifted toward fine diffraction pattern 52a, energy distribution $X_4$ that enhances preheating effect can be obtained. Thus, deterioration of the melting quality due to molten pool wavefront vibration $X_5$ can be suppressed. Conversely, when laser light L1 is shifted toward fine diffraction pattern 52b, melting effect can be enhanced.

[Effect]

The exemplary embodiments described above enable adjusting the energy distribution and the like of laser light L2 by controlling driver 53 to have a parameter value changed by parameter converter 28. As a result, a state of the processing point can be autonomously controlled by changing the energy state of the laser light on workpiece 5. Thus, the weld quality can be further improved.

(Third exemplary embodiment)

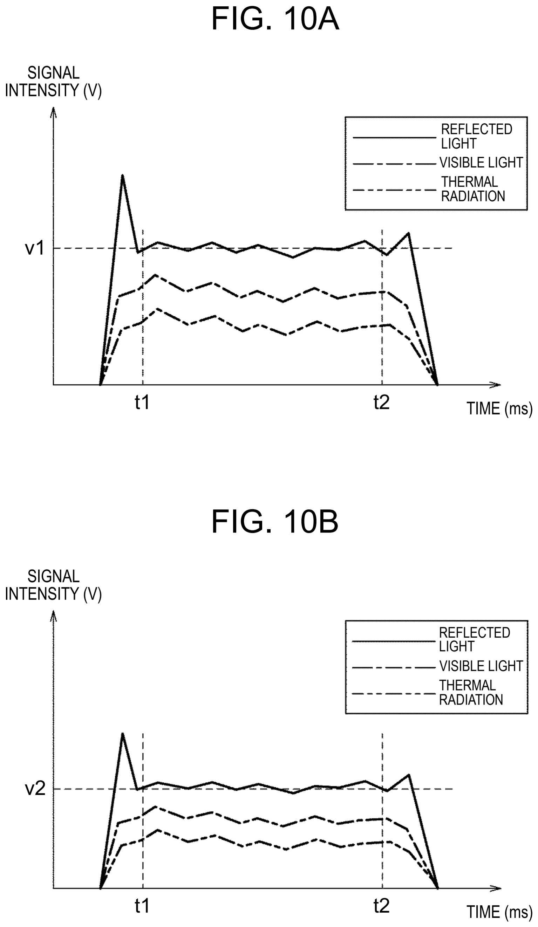

A third exemplary embodiment will be described with reference to Figs. 10A and 10B. The third exemplary embodiment denotes components identical or equivalent to those in the first exemplary embodiment with the same reference marks as those in the first exemplary embodiment. The third exemplary embodiment does not duplicate the description in the first exemplary embodiment.

The third exemplary embodiment is different from the first exemplary embodiment in that a feature value is compared with a predetermined threshold value to determine whether processing of workpiece 5 is normal or abnormal. In the present exemplary embodiment, laser processing system 20 has a configuration as in the first exemplary embodiment, and thus will not be described.

Fig. 10A is a graph illustrating reference waveform data on return light in laser processing system 20 according to the third exemplary embodiment of the present disclosure. Fig. 10B is a graph illustrating waveform data on return light in abnormal processing in a laser processing system according to a fourth exemplary embodiment of the present disclosure.

Determiner 27 calculates signal intensity within a predetermined period of waveform data generated by waveform data generator 25. Figs. 10A and 10B each show an example in which a period from time t1 to time t2 in processing of one shot is set as a predetermined period, and feature value extractor 26 calculates an average value of intensity values of return light indicated by each of the reference waveform data and the generated waveform data, and extracts a difference between the average values. Determiner 27 compares the difference between the extracted average values, that is, the feature value with a predetermined threshold value, and determines whether the processing of workpiece 5 is normal or abnormal.

For example, when the processing of workpiece 5 is normal, laser light L1 is adjusted to be just focused on a surface of workpiece 5, and thus signal intensity of reflected light in waveform data changes while maintaining a high level as illustrated in Fig. 10A, for example. Meanwhile, a distance between a head of laser oscillator 2 of laser processing device 1 and workpiece 5 may change due to time degradation of the laser processing device, a setting failure of the workpiece, an operation error during maintenance of laser processing device 1, or the like. This change causes laser light L1 to be defocused on the surface of workpiece 5. When laser light L1 is defocused on the surface of workpiece 5, energy density on the surface of workpiece 5 decreases. Thus, the signal intensity of the reflected light decreases in the waveform data as illustrated in Fig. 10B, for example.

When laser light L1 is just focused on the surface of workpiece 5, the signal intensity in a predetermined period during processing of one shot, that is, a period from time t1 to time t2 has an average value of intensity v1 as illustrated in Fig. 10A. Meanwhile, the signal intensity in a predetermined period during processing of one shot, that is, a period from time t1 to time t2 has an average value of intensity v2 as illustrated in Fig. 10B. A difference (v1 - v2) between intensity v1 being an average value of signal intensity values of the reference waveform data, and intensity v2 being an average value of signal intensity values of the generated waveform data, is extracted as a feature value by feature value extractor 26.

Thus, determiner 27 can determine that the processing of workpiece 5 is abnormal when the feature value exceeds the predetermined threshold value. When determiner 27 determines that the processing of workpiece 5 is abnormal, parameter converter 28 changes one or more parameters of a focal position of laser light L1, an output value of laser light L1, and an energy distribution of laser light L 1.

[Effect]

The exemplary embodiment described above enables determining whether the processing of workpiece 5 is normal or abnormal by comparing the feature value with the predetermined threshold value. As a result, determination accuracy of normality or abnormality can be improved.

Although the exemplary embodiment described above has been described with an example in which feature value extractor 26 extracts the difference between the average value of the signal intensity values of the reference waveform data and the average value of the signal intensity values of the generated waveform data as the feature value, the present invention is not limited to the example. Feature value extractor 26 may extract a difference in an integral value or a shape between the reference waveform data and the generated waveform data, for example, as a feature value.

(Overview of exemplary embodiments)

(1) A laser processing system according to an aspect of the present disclosure includes a laser processing device that irradiates a workpiece with laser light, a light detector that detects return light including at least one of thermal radiation, visible light, or reflected light, the return light being generated by irradiating the workpiece with the laser light, and a controller that controls the laser processing device, in which the controller is configured to generate waveform data indicating an intensity of the return light during processing of the workpiece based on the return light detected by the light detector, extract a feature value from the waveform data, specify a first parameter having change among a plurality of parameters related to processing of the laser processing device based on the feature value, and change a second parameter among the plurality of parameters based on the first parameter.

(2) The laser processing system of Item (1) may be configured such that the second parameter is different from the first parameter.

(3) The laser processing system of Item (1) or (2) may be configured such that the laser processing device includes: a laser oscillator that oscillates the laser light; a diffractive optical element that comprises a material allowing the laser light to pass through the material and has at least two fine diffraction patterns; and a driver that is attached to at least one of the diffractive optical element and the laser oscillator to change a relative position between the laser light and the diffractive optical element, and the controller controls the driver to irradiate an area across at least two fine diffraction patterns with the laser light.

(4) The laser processing system of any one of items (1) to (3) may be configured such that the feature value is a difference between reference waveform data and the waveform data generated by the controller.

(5) The laser processing system of any one of items (1) to (4) may be configured such that the controller determines whether the processing of the workpiece is normal or abnormal based on the feature value, and specifies the first parameter and changes the second parameter when the processing of the workpiece is abnormal.

(6) The laser processing system of any one of items (1) to (5) may be configured such that the plurality of parameters includes at least one of a parameter related to irradiation conditions of the laser processing device and a parameter related to physical property conditions of the workpiece.

(7) The laser processing system of any one of items (1) to (6) may be configured such that the controller inputs the feature value to an estimation model to acquire the second parameter output from the estimation model, and controls the laser processing device based on the second parameter output from the estimation model, and the estimation model being created by machine learning based on teacher data in which the feature value of the waveform data is associated with a parameter related to the processing of the laser processing device.

(8) The laser processing system of any one of items (1) to (7) may further include an estimator that changes the second parameter based on a correlation equation indicating a correlation between a parameter related to a state of the processing of the workpiece and a parameter related to the processing of the workpiece, in which the correlation equation includes the parameter related to the state of the processing of the workpiece as an objective variable and includes a parameter related to irradiation conditions of the laser processing device as an explanatory variable.

(9) The laser processing system of item (8) may be configured such that the correlation equation uses a parameter related to the physical property conditions of the workpiece as the explanatory variable.

(10) The laser processing system of any one of items (1) to (9) may be configured such that the feature value is a difference between an average value of intensity values of the return light in the reference waveform data and an average value of intensity values of the return light in the waveform data generated by the controller, and the controller compares the feature value with a predetermined threshold value to determine whether the processing of the workpiece is normal or abnormal.

(11) The laser processing system of item (10) may be configured such that the controller determines that the processing of the workpiece is abnormal when the feature value exceeds the predetermined threshold value, and changes a parameter related to one or more of a focal position of the laser light, an output value of the laser light, and an energy distribution of the laser light when the processing of the workpiece is abnormal.

The present disclosure enables providing a laser processing system improved in weld quality.

INDUSTRIAL APPLICABILITY

The laser processing system according to the present disclosure is widely applicable to processing of performing welding or the like by irradiating laser light for improving weld quality.

REFERENCE MARKS IN THE DRAWINGS

1, 1A: laser processing device
2: laser oscillator
3a: lens unit
3b: lens unit
5: workpiece
6: half mirror
7: lens
8: half mirror
20, 20A: laser processing system
24: light detector
25: waveform data generator
26: feature value extractor
27: determiner
28: parameter converter
30: lens unit
52: diffractive optical element
52a: fine diffraction pattern
52b: fine diffraction pattern
53: driver
55, 65: controller

**Claims**

1. A laser processing system comprising:

   a laser processing device that irradiates a workpiece with laser light;
   a light detector that detects return light including at least one of thermal radiation, visible light, or reflected light, the return light being generated by irradiating the workpiece with the laser light; and
   a controller that controls the laser processing device,
   wherein the controller is configured to:

   generate waveform data indicating an intensity of the return light during processing of the workpiece based on the return light detected by the light detector;
   extract a feature value from the waveform data;
   specify a first parameter having change among a plurality of parameters related to processing of the laser processing device based on the feature value; and
   change a second parameter among the plurality of parameters based on the first parameter.

2. The laser processing system according to Claim 1, wherein the second parameter is different from the first parameter.

3. The laser processing system according to Claim 1, wherein
   the laser processing device includes:

   a laser oscillator that oscillates the laser light;
   a diffractive optical element that comprises a material allowing the laser light to pass through the material and has at least two fine diffraction patterns; and
   a driver that is attached to at least one of the diffractive optical element and the laser oscillator to change a relative position between the laser light and the diffractive optical element, and
   the controller controls the driver to irradiate an area across at least two fine diffraction patterns with the laser light.

4. The laser processing system according to Claim 1, wherein the feature value is a difference between reference waveform data acquired in advance and the waveform data generated by the controller.

5. The processing system according to Claim 1, wherein

   the controller determines whether the processing of the workpiece is normal or abnormal based on the feature value, and
   the controller specifies the first parameter and changes the second parameter when the processing of the workpiece is abnormal.

6. The laser processing system according to Claim 1, wherein the plurality of parameters includes at least one of a parameter related to irradiation conditions of the laser processing device and a parameter related to physical property conditions of the workpiece.

7. The laser processing system according to Claim 1, wherein

   the controller

   inputs the feature value to an estimation model to acquire the second parameter output from the estimation model, and
   controls the laser processing device based on the second parameter output from the estimation model, and

   the estimation model being created by machine learning based on teacher data in which the feature value of the waveform data is associated with a parameter related to the processing of the laser processing device.

8. The laser processing system according to Claim 1, wherein

   the controller changes the second parameter based on a correlation equation indicating a correlation between a parameter related to a state of the processing of the workpiece and a parameter related to the processing of the workpiece, and

the correlation equation includes the parameter related to the state of the processing of the workpiece as an objective variable and includes a parameter related to irradiation conditions of the laser processing device as an explanatory variable.

9. The laser processing system according to Claim 8, wherein the correlation equation includes a parameter related to the physical property conditions of the workpiece as the explanatory variable.

10. The laser processing system according to Claim 1, wherein

the feature value is a difference between an average value of intensity values of the return light in the reference waveform data and an average value of intensity values of the return light in the waveform data generated by the controller, and

the controller compares the feature value with a predetermined threshold value to determine whether the processing of the workpiece is normal or abnormal.

11. The laser processing system according to Claim 10, wherein

the controller determines that the processing of the workpiece is abnormal when the feature value exceeds the predetermined threshold value, and

the controller changes a parameter related to one or more of a focal position of the laser light, an output value of the laser light, and an energy distribution of the laser light when the processing of the workpiece is abnormal.

# FIG. 1

# FIG. 2

55

CONTROLLER

| WAVEFORM DATA GENERATOR | — 25 |

↓

| FEATURE VALUE EXTRACTOR | — 26 |

↓

| DETERMINER | — 27 |

↓

| PARAMETER CONVERTER | — 28 |

# FIG. 3A

# FIG. 3B

# FIG. 4

# FIG. 5

# FIG. 6A

# FIG. 6B

# FIG. 7A

# FIG. 7B

# FIG. 8A

# FIG. 8B

# FIG. 9A

L1

52a

52b

52

Z

X ← ⊙ Y

# FIG. 9B

Z

X ← → Y

# FIG. 10A

# FIG. 10B

## INTERNATIONAL SEARCH REPORT

| International application No. |
| --- |
| **PCT/JP2024/015888** |

| A. | CLASSIFICATION OF SUBJECT MATTER |
| --- | --- |

*B23K 26/00*(2014.01)i
FI:  B23K26/00 P

According to International Patent Classification (IPC) or to both national classification and IPC

| B. | FIELDS SEARCHED |
| --- | --- |

Minimum documentation searched (classification system followed by classification symbols)

B23K26/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2023-061288 A (AMADA CO., LTD.) 01 May 2023 (2023-05-01)<br>entire text, all drawings | 1-11 |
| A | JP 2000-061672 A (SUMITOMO HEAVY INDUSTRIES, LTD.) 29 February 2000 (2000-02-29)<br>entire text, all drawings | 1-11 |
| A | JP 2000-271768 A (NISSAN MOTOR CO., LTD.) 03 October 2000 (2000-10-03)<br>entire text, all drawings | 1-11 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/015888**

| Patent document cited in search report | | | Publication date (day/month/year) | Patent family member(s) | Publication date (day/month/year) |
|---|---|---|---|---|---|
| JP | 2023-061288 | A | 01 May 2023 | (Family: none) | |
| JP | 2000-061672 | A | 29 February 2000 | (Family: none) | |
| JP | 2000-271768 | A | 03 October 2000 | US 6399915 B1 entire text, all drawings DE 10013892 A1 | |

Form PCT/ISA/210 (patent family annex) (July 2022)

**EP 4 725 637 A1**

**Patent documents cited in the description**

- JP 2020175425 A